# EUROPEAN PATENT APPLICATION

(11) **EP 2 832 982 A1**
(43) Date of publication of application: **04.02.2015**
(21) Application number: 13178817.6
(22) Date of filing: 31.07.2013
(51) Int. Cl.: F02M 25/022, F02M 25/025, F02B 47/02, C10L 1/32, B01F 11/02

(54) **System and method for reducing the amount of polluting contents in the exhaust gas of a liquid fueled combustion engine**

(71) Applicant: OTC GmbH, 46047 Oberhausen (DE)
(72) Inventor: Dahms, Gerd, 47138 Düsseldorf (DE)
(74) Representative: Michalski Hüttermann & Partner Patentanwälte mbB

(57) **Abstract**

The present invention relates to a method and system for reducing the amount of polluting contents in the exhaust gas of liquid fueled combustion engines, characterized in that a water-in-oil-emulsion is prepared and fed to the combustion system, comprising the steps a) injecting an organic oil phase, an emulsifier and an aqueous phase into a first mixing area; b) mixing of the components in order to achieve a High Internal Phase Emulsion (HIPE); c) injecting the High Internal Phase Emulsion (HIPE) of step b) and an additional organic oil phase into a second mixing area; d) mixing the components in order to achieve a homogeneous water-in-oil-emulsion and e) providing the water-in-oil-emulsion to the combustion system.

## Description

### FIELD OF THE INVENTION

The present invention relates to a method and system for reducing the amount of polluting contents in the exhaust gas of liquid fueled combustion engines, wherein a water-in-oil-emulsion is prepared and fed to the combustion system, comprising the steps a) injecting an organic oil phase, an emulsifier and an aqueous phase into a first mixing area; b) mixing of the components in order to achieve a High Internal Phase Emulsion (HIPE); c) injecting the High Internal Phase Emulsion (HIPE) of step b) and an additional organic oil phase into a second mixing area; d) mixing the components in order to achieve a homogeneous water-in-oil-emulsion and e) providing the water-in-oil-emulsion to the combustion system.

### BACKGROUND OF THE INVENTION

Modem combustion engines are still responsible for a significant amount of the worldwide air pollution. This is true, albeit a vast progress has been achieved in the field of an eco-friendly design in the recent decades and engines are available nowadays yielding high efficiency levels at low fuel consumption. Nevertheless, due to the complexity of the combustion process still unwanted "by-products" are generated during energy conversion, like fine-dust or elevated levels of NO_{X}, which are considered toxic to higher organisms and means for the reduction of such pollutants, are subject to extended research.

Due to the industrial and environmental importance of this topic several different strategies has been suggested in order to reduce unwanted pollutants in the exhaust gas of combustion engines.

WO2003050402 for instance describes high-efficiency combustion engines, including Otto cycle engines, which use a steam-diluted fuel charge at elevated pressure. Air is compressed, and water is evaporated into the compressed air via the partial pressure effect using waste heat from the engine. The resultant pressurized air-steam mixture is then burned in the engine with fuel, preferably containing hydrogen to maintain flame front propagation. The high-pressure, steam-laden engine exhaust is used to drive an expander to provide additional mechanical power. The exhaust can also be used to reform fuel to provide hydrogen for the engine combustion. The engine advantageously uses the partial pressure effect to convert low-grade waste heat from engine into useful mechanical power. It is said that the engine is capable of high efficiencies (e.g. >50%), with minimal emissions.

US 20120312166 Al discloses a plant for purifying marine diesel exhaust from combustion of heavy oil, wherein said plant comprises: a) a spray tower comprising one or more feed lines for combustion of gas and/or water, b) a venturi scrubber connected directly to said spray tower and comprising a further feed line for water, c) a mist eliminator, in the form of a cyclone, which is connected to said venturi scrubber and comprises one or more outlet lines for purified gas and scrubbing liquid, and d) a disc separator connected to said mist eliminator via said outlet line for said scrubbing liquid.

Additionally, DE 198 20 682 Al provides a method to clean the exhaust gas of internal-combustion engines or other machines which are operated with fossil fuel. It is proposed to firstly pretreat the exhaust gas in a non-thermal normal-pressure gas discharge and subsequently allow a selective catalytic reduction of oxidic noxious substances to take place with the addition of a suitable reduction substance, or to allow a selective catalytic decomposition to take place. The device for removing oxidic noxious substances is characterized by a series circuit of at least one module with a gas discharge section and at least one module with a catalytic-converter section, and is suitable in particular for use in a diesel engine.

Furthermore, DE 4443260 Al provides a possible solution for the reduction of pollutants in the exhaust gas of thermal engines. The unit consists of two heat engines, the first one of which generates drive energy and produces exhaust gases containing environmentally dangerous pollutant concentrations. The exhaust gas pollutants from the first engine are completely or partially absorbed by the second engine. The concentrations of pollutants in the form of carbon, i.e. soot, carbon monoxide, unburned hydrocarbons, fuel residues from the first engine, and nitrogen oxides, are lowered by at least twice the power of ten, and the second engine has a clean exhaust. The second engine is chemically optimized, so that the final exhaust gas does not contain environmentally dangerous substances in any undesired concentrations, except for carbon dioxide.

A special emulsion is provided by DE 4211784 A1, which should enable the reduction of pollutants in exhaust gas. Within this document a direct colloid determined conversion of fluid fuels produced in a refinery, e.g. petrol, kerosene and diesel, to a state in which they are consumed in internal combustion engines to produce and exhaust gas, which is practically harmless ecologically is disclosed. A special emulsion is used comprising mineralised water, unsaturated plant oils and lead-free petrol which produces an auto-catalytic, kinetic and electrodialytic alteration of the hydrocarbon content of the fuel. Oxygen is applied and hydrogen is chemically integrated in the cyclic hydrocarbon, whereby a catalytic second combustion with hydrogen and oxygen is activated in the engine. This alters the harmful materials in the exhaust gas so that they are environmentally harmless, preventing the formation of lead acids, cyanic acids and sulphur oxide in the catalytic convertor.

Although the presented methods might be effective, the technical setup is generally complex and costly and most of the times difficult to integrate into working environments, where space is very limited, like modem automotive settings.

### SUMMARY OF THE INVENTION

The present invention has the object of providing an effective and low cost alternative way to reduce the pollutant contents in the exhaust gas of liquid fueled combustion engines and to solve the shortcomings of the prior art by a method according to claim 1 and a system according to claim 10. Preferred embodiments of the invention are disclosed in the additional claims.

### DETAILED DESCRIPTION OF THE PREFERRED EMBODIMENTS

This object is achieved according to the invention by the provision of a method for reducing the amount of polluting contents in the exhaust gas of liquid fueled combustion engines, **characterized** in that a water-in-oil-emulsion is prepared and fed to the combustion system, comprising the steps
a) injecting an organic oil phase, an emulsifier and an aqueous phase into a first mixing area;
b) mixing of the components in order to achieve a High Internal Phase Emulsion (HIPE);
c) injecting the High Internal Phase Emulsion (HIPE) of step b) and an additional organic oil phase into a second mixing area;
d) mixing the components in order to achieve a homogeneous water-in-oil-emulsion and
e) providing the water-in-oil-emulsion to the combustion system.

Surprisingly it has been found that such method is able to significantly reduce the amount of polluting contents in the exhaust gas of liquid fueled combustion engines. This is especially found for the content of mono-nitrogen gases and for the amount of fine dust particles in the exhaust gas. Without being bound by the theory it is assumed that the water content in the liquid fuel is interacting in the course of the combustion with such species, resulting in a more effective combustion process and therefore leads to a reduction of those pollutants. In addition it was found, that due to the incorporation of the water content in the liquid fuel also the power output and the efficiency of the engine can be optimized. This finding can be the result of an easier evaporation of the water-oil droplets and an optimized compression process within the combustion engine. The water may also contribute to the cooling of the charge air, yielding a higher air density. Therefore, the angular ignition spacing can be adjusted, because cooler charge air is less prone to pinging. In addition, also the engine itself is subject to an inside cooling process, reducing the danger of a thermal overload. As a consequence higher liquid fuel amounts may be used in the combustion process resulting in a higher power output.

Polluting contents in the exhaust gas are eco-unfriendly, mostly toxic gases or particles, which are generated in the course of the combustion process. In the sense of the invention these pollutants are especially fine-dust and non carbon-dioxide gases like the nitrogen containing gases. Here especially the mono-nitrogen gases are concerned.

Liquid fueled combustion engines are systems generating mechanical power by the combustion of one or more carbon sources and (compressed) air or Oxygen. Within this invention liquid fueled combustion engines are concerned, which are powered by supply of a carbon source in liquid form. It is preferred that the fuel is liquid at working conditions, i.e. the temperature and the pressure of the surrounding has to be considered. Hence, it is also possible to use gaseous substances and liquefy theses by application of high pressure. Examples of preferred liquid carbon sources are diesel, petrodiesel, biodiesel, gasoline, premium gasoline, light fuel oil, heavy fuel oil, heating oil, alcohols like methanol etc., kerosene, hydrogenated (vegetable) oils and fats et cetera.

A water-in-oil-emulsion in the sense of the invention is a mixture of two or more liquids that are normally immiscible. It is a two-phase system, wherein water comprises the dispersed or inner phase and oil comprises the outer or continuous phase.

Within the first mixing step a structured High Internal Phase Emulsion (HIPE) is achieved, which consists of an internal water phase, a surrounding organic oil phase and the emulsifier. Such phase exhibits under the microscope spherical water droplets, which show a narrow particle size distribution. The water droplets are surrounded by stacked viscoelastic emulsifier bilayers, which separate the organic oil and the aqueous phases. The multi-layers may be organized in spherical form around the water phase or as a bi-continuous phase with the consequence that a lytropic inverse cubic phase is formed. The surfactants in the multi-layers are organized in such a way that the hydrophobic tails of the emulsifier are at stabilizing the organic oil phase and the hydrophilic parts of the molecules are in contact with the aqueous phase

The organic oil phase can be any of the liquid carbon sources as mentioned above. The organic oil phase may comprise saturated hydrocarbons, like paraffins including n-, iso-, and cycloparaffins or aromatic hydrocarbons. Preferably the organic oil phase has a boiling point larger or equal 20°C and smaller or equal 450°C. Preferably the boiling point of the organic oil phase is larger or equal 50°C and smaller or equal 400°C and even more preferably larger or equal 100°C and smaller or equal 360°C.

The term emulsifier defines a low molecular weight compound, which is able to stabilize a mixture of two different solvents exhibiting different polarity. In principle all emulsifier, surfactant or tenside types known to the skilled in the art may be used to partially stabilize such emulsion-type, which are able to yield a water-in-oil (organic phase) system at the end of the mixing process at the given temperature and pressure. Useful nonionic surfactants are, for example, various sorbitan esters, such as polyethylene glycol sorbitan stearic acid ester, fatty acid polyglycol esters or poly-condensates of ethyleneoxide and propyleneoxide, as they are on the market, for example, under the trade name "Pluronics^{®}". Further nonionic surfactants useful in the compositions according to invention are C10-C22-fatty alcohol ethoxylates. Suitable non-limiting examples are oleth-2, oleth-10, oleth- 11 , oleth-12, oleth-15, oleth-16, oleth-20, oleth-25, oleth-30, oleth-35, oleth-40, laureth-10, laureth-1 , laureth-12, laureth-13, laureth-15, laureth-16, laureth-20, laureth-25, laureth-30, laureth-35, laureth-40, laureth-50, ceteth-10, ceteth-12, ceteth-14, ceteth-15, ceteth-16, ceteth-17, ceteth-20, ceteth-25, ceteth-30, ceteth-40, ceteth-45, cetoleth-10, cetoleth-12, cetoleth-14, cetoleth-15, cetoleth-16, cetoleth-17, cetoleth-20, cetoleth-25, cetoleth-30, cetoleth-40, cetoleth-45, ceteareth-10, ceteareth-12, ceteareth-14, ceteareth-15, ceteareth-16, ceteareth-18, ceteareth-20, ceteareth-22, ceteareth-25, ceteareth-30, ceteareth-40, ceteareth-45, ceteareth-50, isosteareth-10, isosteareth-12, isosteareth-15, isosteareth-20, isosteareth-22, isosteareth-25, isosteareth-50, steareth-10, steareth-11 , steareth-14, steareth-15, steareth-16, steareth-20, steareth-25, steareth-30, steareth-40, steareth-50, steareth-80, steareth-100 and low ethoxylated derivatives of the aforementioned emulsifier. Further non-ionic surfactants within the meaning of the present invention are polyalkyleneglycol ether of fatty acid glyceride or partial glyceride with at least 30 polyalkylene units are with 30 to 1000, preferably 30 to 500, more preferably 30 to 200 and most preferably 40 to 100 polyethyleneglycol units. Examples to those are PEG-30 hydrogenated castor oil, PEG-35 hydrogenated castor oil, PEG-40 hydrogenated castor oil, PEG-45 hydrogenated castor oil, PEG-50 hydrogenated castor oil, PEG-55 hydrogenated castor oil, PEG-60 hydrogenated castor oil, PEG-65 hydrogenated castor oil, PEG-80 hydrogenated castor oil, PEG-100 hydrogenated castor oil, PEG-200 hydrogenated castor oil, PEG-35 castor oil, PEG-50 castor oil, PEG-55 castor oil, PEG- 60 castor oil, PEG-80 castor oil, PEG-100 castor oil, PEG-200 castor oil. Further suitable non-ionic surfactants are monoglycerides such as glyceryl stearate, glyceryl palmitate, glyceryl myristate, glyceryl behenate.

In a preferred embodiment of the invention the emulsifiers can also be selected from the group of protein tensides like hydrolyzed keratin, cocodimonium hydroxypropyl hydrolyzed collagen, cocodimopnium hydroxypropyl hydrolyzed casein, cocodimonium hydroxypropyl hydrolyzed collagen, cocodimonium hydroxypropyl hydrolyzed hair keratin, cocodimonium hydroxypropyl hydrolyzed keratin, cocodimonium hydroxypropyl hydrolyzed rice protein, cocodimonium hydroxypropyl hydrolyzed soy protein, cocodimonium hydroxypropyl hydrolyzed wheat protein, hydroxypropyl arginine lauryl/myristyl ether, hydroxypropyltrimonium gelatin, hydroxypropyltrimonium hydrolyzed casein, hydroxypropyltrimonium hydrolyzed collagen, hydroxypropyltrimonium hydrolyzed conchiolin protein. Such emulsifiers are especially preferred, because besides acting as emulsifier they also might increase the amount of combustible carbon sources and hence may additionally contribute to the combustion process. Due to the fact that they are derived from renewable resources their carbondioxide balance can be neutral.

In another embodiment also amides and amide esters with carboxylic acids and organic acid esters can be used as emulsifier. Suitable emulsifier of this group may include cocoyl amide, oleyl amide and glucamide.

Furthermore, also silicon emulsifier can be used in the inventive method. Such silicon emulsifier may include poly-condensates of ethylene-oxide and propylene-oxide of dimethicone crosspolymer, lauryl PEG/PPG -18/18 methicone, cetyl PEG / PPG-10/1 dimethicone, bis-PEG/PPG-14/14 dimethicone and amodimethicone Glycerocarbamate.

Preferably also ionic w/o emulsifier may be used in the inventive method. Within this group partial glycerides of fatty acids such as succinic acid or isostearyl diglyceryl succinate can act as suitable emulsifier.

In addition, emulsifiers can be suitable comprising a HLB-value smaller than 10 and/or emulsifier comprising a packing parameter larger than one. Suitable non-ionic emulsifier may be sorbitan-ester, sorbitol-ester, manitan-ester, manitol-ester, isosorbide-ester, glycerin-ester, methyl-glycoside-ester, polyglycerine-ester, sucrose-ester and poly-condensates of ethylene-oxide and propyleneoxide of such surfactants, in addition lanolin and lanolin derivatives. Furthermore also the ethoxilated derivatives of such emulsifiers may be used. Such emulsifier are especially able to easily form HIPE phases without the need of high shear mixing. Thus, such phases are fast and reliably produced.

Highly preferred are emulsifiers comprising a RCI (renewable carbon index) of larger or equal 90.

The aqueous phase can comprise mainly water. The water quality can be adapted to the special environment and defined water qualities can include tap-water, distilled water, water for injection, de-mineralised water etc.. In addition to the water also additional water soluble substances like salts or small organic water soluble molecules like alcohols or polyols can be present in or added to the aqueous phase. The additional alcohols or polyols might additionally increase the combustible carbon content and might ease the storage of the water content, because it might prevent the water from freezing in a cold environment. Suitable small organic molecules may be glycerin or glycols.

Within a further object of the inventive method the steps c) and d) can be performed in 1 - 10 separate mixing areas. In certain cases where the amount of emulsifier or the available mixing power of a single stirrer unit is limited it might be useful to divide the emulsification process in more than two separate mixing steps. This might help to achieve the same result compared to a situation where more mixing power or emulsifier is available. In addition, also more separate mixing areas might be helpful if especially low droplet sizes or a very narrow distribution of droplet sizes is necessary within the application. In a preferred embodiment a static mixing pipe can be used. This can be advantageous, because no moving pieces like stirrers are required in such case, which might result in a reduction of the costs. The total amount of separate mixing areas can be determined as a function of the inlet pipes, i.e. the amount of mixing areas is equal to the number of organic oil phase inlets.

In another preferred aspect of the inventive method the water content in step b) can be ≥ 60 vol.% and ≤ 95 vol.%. Such range of water content in the first mixing area may be useful in order to achieve a sufficiently stable lyotropic liquid crystalline phase of a HIPE without the need of a high shear mixing, which requires large mixing energies. This is achievable, because the lyotropic liquid crystalline phase of a HIPE is generated nearly spontaneous. Preferably the water content in step b) can be ≥ 70 vol.% and ≤ 90 vol.% and more preferably ≥ 75 vol.% and ≤ 85 vol.%.

In another preferred embodiment of the inventive method the water content in step e) can be > 0,1 vol.% and ≤ 30 vol.%. Before the water-in-oil-emulsion is provided to the combustion system the water content should be in the above indicated range. Such range is useful in order to achieve a significant reduction of the pollutants in the exhaust gas and to increase the performance of the combustion engines. This water content might help to evaporate the usually higher boiling oil phase and therefore might increase the effectiveness of the combustion process. Higher water contents are not preferred, because they may increase the corrosion of the inner combustion system or even may result in an undefined combustion process. In the worst case the combustion will be prevented. In certain cases the water content in step e) can be > 0,5 vol.% and ≤ 20 vol.% and additionally preferred ≥ 1,0 vol.% and ≤ 10 vol.%.

In an additional characteristic of the inventive method the emulsifier content in step b) can be ≥ 2 vol.% and ≤ 5 vol.%. Such a range of emulsifier concentration has been rendered useful because within this emulsifier range stable High Internal Phase Emulsion (HIPE) phases are obtainable. Lower concentrations are not preferred, because as a function of the oil content either no High Internal Phase Emulsion (HIPE) phases are obtainable or the stability of the lamellar crystalline phases might be insufficient. In a preferred embodiment the emulsifier content in step b) can be ≥ 2,25 vol.% and ≤ 4,0 vol.% and additionally preferred the emulsifier content in step b) can be ≥ 2,5 vol.% and ≤ 3,5 vol.%.

An additional embodiment according to the invention comprises a method, wherein the emulsifier content in step e) can be ≥ 0,05 vol.% and ≤ 1 vol.%. This emulsifier concentration range is able to provide a stable water-in-oil emulsion to the combustion system by using only low shear forces. Therefore, the mixing energy can be kept low and also the running costs due to the material expenses are minimal. Higher concentration may lead to increasing material costs due to an unnecessary stabilization of the water-in-oil emulsion. Lower emulsifier concentrations are also not favored, because it might appear that the water-in-oil emulsion will break and larger water droplet sizes are formed. This might lead to an improper combustion process. In a preferred embodiment the emulsifier content in step e) can be ≥ 0,1 vol.% and ≤ 0,8 vol.% and additionally preferred the emulsifier content in step e) can be ≥ 0,2 vol.% and ≤ 0,6 vol.%.

An additional aspect of the invention comprises a method, wherein the size of the water droplets in step e) can be ≥ 100 nm and ≤ 500 nm. This water droplet size is preferred for several reasons. On the one hand this droplet size ensures a high water surface, which enables an undisturbed combustion process and is easing the evaporation process of the organic oil phase. Hence, the combustion process is optimized and the performance of the combustion process is increased. Furthermore, the droplets are small enough in order to avoid extinction of the combustion or major disturbances of the flame front. In a preferred embodiment the water droplet size in step e) can be ≥ 120 nm and ≤ 450 nm additionally preferred the water droplet size in step e) can be ≥ 200 nm and ≤ 400 nm. The given water droplet size in step e) is a mean diameter and can be determined in the emulsion using multi-angle light scattering techniques as known to the skilled in the art.

In a further embodiment of the invention the method comprises an emulsifier, wherein the HLB of the emulsifier added in step a) can be ≥ 1 and ≤ 9. This range of HLB-values (hydrophilic-lipophilic-balance) is preferred, because by using this range stable liquid crystalline inverse cubic phases in the first mixing step and stable water-in-oil-emulsions are easily obtainable, without the need of high shear energies in the missing process. Within the meaning of the invention such HLB-value includes, that either only one emulsifier is present comprising such HLB-range or a mixture of different emulsifier is used, which comprise the proposed HLB-value in combination. The mathematics to calculate the HLB-value of a single emulsifier is given by Griffin. The HLB-determination of emulsifier mixtures as a function of the single HLB-value and the amount of the different emulsifiers is also known to the skilled in the art. Preferably emulsifiers are used exhibiting a HLB-value larger or equal 0,5 and smaller or equal 10,0. Preferably the HLB-value may be larger or equal 1,0 and smaller or equal 9,0. In addition, the use of non-ionic surfactants with a HLB-value in that range is preferred because such kind of emulsifier do easily form HIPEs in the first mixing step and easily transform into a water-in-oil-emulsion in the following mixing steps without the need of adding high energy shear stresses to the emulsion.

Furthermore, in a preferred aspect of the inventive method the shape factor of the emulsifier in step a) can be ≥1/2 and ≤ 2. The shape factor (= V/(a₀*l_{c})) for the emulsifier is determined according to Israelachvili and is given by the ratio of the volume (V) and the product of the length of the tail and the surface area of the head-group(a₀*l_{c}). It has surprisingly been found that such range of emulsifier shape factors is able to ease the lamellar phase formation in the first mixing area and result in stable water-in-oil emulsion after the last mixing step. This result is achievable without the need to introduce high shear mixing within the single mixing areas. This reduces production costs and processing times.

Further, a system for the reduction of the polluting content in the exhaust gas of liquid fueled combustion engines is within the scope of the invention, comprising a mixing system with at least a first and a second mixing area, wherein the output line of the last mixing area is connectable to a combustion system and each mixing area comprises
- an essential rotationally symmetric mixing chamber,
- at least one inlet line for introduction of free-ftowing components arranged upstream of or below the at least one outlet line,
- at least one conveying device per component or per component mixture,
- a turbulent mixing area on the inlet side, in which the components are mixed turbulently by the shear forces exerted by the stirrer units,
- a downstream percolating mixing area in which the components are mixed further and the turbulent flow decreases,
- a stirrer unit which ensures laminar flow and comprises stirrer elements secured on a stirrer shaft, the axis of rotation of which runs along the axis of symmetry of the chamber and the stirrer shaft of which is guided on at least one side,
- at least one drive for the stirrer unit,
wherein
- the ratio between the distance between inlet and outlet lines and the diameter of the chamber is ≥ 2:1,
- the ratio between the distance between inlet and outlet lines and the length of the stirrer arms of the stirrer elements is 3:1-50:1,
- the ratio of the diameter of the stirrer shaft, based on the internal diameter of the chamber, is 0.25 to 0.75 times the internal diameter of the chamber,
and wherein
the first mixing area comprises
- at least two input lines
- a laminar mixing area on the outlet side, in which a lyotropic, liquid-crystalline phase is established in the mixture of the components, in the direction of the outlet line.

The percolating mixing area is the transition area of the mixture, in which this changes from turbulent flow to laminar flow. In the percolating area following the turbulent mixing the viscosity increases, caused by a formation of a liquid-crystalline phase, and the turbulent flow decreases. After reaching the critical Reynolds number, the mixture passes into a laminar mixing area. Controlled and energy-efficient severing of the drops during the mixing process or the formation of liquid-crystalline phases then occurs in the laminar mixing area under conditions of elongational flow.

The chamber of the at least one mixing apparatus is essentially rotationally symmetric and preferably has the shape of a hollow cylinder. The chamber, however, can also have the shape of a frustocone, of a funnel, of a frustodome, or a shape composed of these geometric shapes, wherein the diameter of the chamber from the inlet line to the outlet line remains constant or decreases. The stirrer unit is adapted according to the shape of the rotationally symmetric chamber. Essentially rotationally symmetric means that the symmetry of the chamber may vary from a perfect circular symmetry by ≤10%, preferably by ≤5%, most preferred by ≤1%

The diameter of the stirrer shaft dₛₛ relative to the internal diameter of the chamber dₖ is preferably in the range 0.25-0.75 x dₖ and the ratio between the distance between inlet and outlet lines and the length of the arms of the stirrer elements is preferably in the range 3:1-50:1, particularly preferably in the range 5:1-10:1, in particular in the range 6:1-8:1. The unusually large diameter of the stirrer shaft in relation to the chamber diameter furthermore has the result that the distance between stirrer shaft and chamber wall - designated by the person skilled in the art as the "flow diameter" - is always so small that no thrombi-like flow can develop and a laminar flow is ensured.

The ratio of the distance between inlet and outlet line to the diameter of the chamber at the bottom of the at least one mixing apparatus is ≥ 2:1. In one form of the rotationally symmetric chamber deviating from a hollow cylinder, the ratio of distance between inlet and outlet lines to the diameter of the chamber is likewise ≥ 2:1 in the area of the inlet line of the at least one mixing apparatus.

The mixing apparatus can be sealed on all sides and can be operated with exclusion of air. The components to be mixed can be introduced into the chamber of the mixing apparatus as fluid streams, mixed by means of the stirrer unit until the mixed components reach the outlet line and may be removed such that no air penetrates into the chamber of the mixing apparatus. The mixing apparatus is designed here such that as little dead space as possible is present. In the putting into operation of the mixing apparatus, the air contained therein is displaced completely by the entering components within a short time, whereby the application of a vacuum is advantageously unnecessary.

Since the system may operate with exclusion of air and the components to be emulsified are introduced into the mixing apparatus continuously, the components situated in the mixing apparatus are continuously transported away in the direction of the outlet line. The mixed components flow through the mixing apparatus gradually starting from the inlet to the outlet.

In the mixing apparatus according to the invention, the components supplied via the inlet lines firstly migrate after entry into the chamber through a turbulent mixing area, in which they are first mixed turbulently by the shear forces exerted by the stirrer units. In this connection, the viscosity of the mixed product already noticeably increases. Further in the direction of the outlet line, the mixture then migrates through a "percolating area", in which the viscosity of the mixture further increases due to further intensive mixing and the system gradually converts into a self-organizing system. The turbulences in the flow prevailing in the mixture gradually decrease with reaching of the percolating area, and the flow ratios become increasingly laminar in the direction of the outlet lines. A lyotropic, liquid-crystalline phase, a HIPE, thereby results in the mixture to the outlet line of the first mixing area.

Advantageously, the total energy consumption of the emulsifying device according to the invention is extremely low. This low total energy consumption results from always only small volumes having to be mixed and temperature-controlled in the mixing apparatuses in comparison to conventional mixing processes. In particular, cost-intensive and very energy-consuming heating and cooling processes are thus minimized and contribute decisively to the low total energy consumption. The residence times of the mixture in the mixing chamber are also very short. With a production capacity of 1000 kg/h, the residence time is on average between 0.5 and 10 seconds. It results from this that the inlet lines and pumps are also of significantly smaller dimensions and thus also the drives of the pumps take up significantly less energy.

Advantageously, the favorable ratio between the distance between inlet and outlet lines and the length of the arms of the stirrer elements, which is preferably in the range 3:1-50:1, particularly preferably in the range 5:1-10:1, in particular in the range 6:1-8:1, contributes, in connection with the special wire pipes, to the fact that a particularly effective torque moment utilization is guaranteed and thus thorough mixing with minimized energy consumption of the motor at the same time is achieved.

Furthermore, the unusually large shaft diameter in relation to the chamber diameter makes it possible that the stirrer shaft itself can be utilized for product temperature control, which for its part contributes to the low total energy consumption of the emulsifying device according to the invention.

As a result of the favorable ratio of diameter of the chamber to its height and the stirrer unit optimized for the maintenance of laminar flow, the power uptake of the stirrer motor is significantly lower and contributes decisively to the low total energy consumption of the apparatus according to the invention. As a result of the thus, overall, smaller dimensionable components, a very compact and space-saving construction is characteristic of the mixing apparatus according to the invention.

The use of magnetic couplings likewise may contribute to the lowering of the overall energy consumption. Since the transfer of force here from the motor to the motor shaft takes place by means of permanent magnets, the motor only has to apply the energy which is needed for rotation of the external rotor. The internal rotor with a fixed stirrer shaft may be moved by means of the magnetic force. A further advantage in connection with a plain bearing is that a hermetically sealed mixing chamber can be constructed.

For an optimal emulsifying result and for the avoidance of dead spaces, chambers that have a rotationally symmetric shape may be employed in the mixing apparatuses according to the invention. Such rotationally symmetric shapes are preferably hollow cylinders, frustocones, funnels, frustodomes, or shapes composed of these, in which, for example, a frustocone-like area connects to a hollow cylindrical area. The diameter of the mixing apparatus in this connection may either remain constant from the inlet-side end to the outlet-side end or it may decreases.

Particularly preferably, a chamber with the shape of a hollow cylinder or of a frustocone or with a combined shape of a hollow cylindrical area and a frustocone-like area is employed in the mixing apparatus according to the invention. The frustocone is advantageously distinguished in that the diameter of the inlet-side end to the diameter on the outlet-side end continually decreases, while the diameter of the hollow cylinder with respect to the axis of rotation is constant.

Advantageously, the chambers of the mixing apparatus and/or the inlet and outlet lines can be temperature-controlled together or individually.

The angle of entry of the inlet lines into the mixing apparatus can in this connection be in the range from 0° to 180°, based on the axis of rotation of the mixing apparatus. The inlet lines can extend into the chamber laterally through the jacket surface or from below through the bottom surface.

The inlet and outlet lines can be connected to the chamber at any desired height and on any desired circumference of the jacket surface. To guarantee optimal mixing with, at the same time, maximum residence time of the components supplied, and to avoid dead spaces, the entry height of the inlet lines is preferably situated in the lower third, preferably in the lower quarter, of the chamber, based on the height of the chamber. The exit height of the outlet line is preferably situated in the upper third, preferably in the upper quarter, of the chamber, based on the height of the chamber.

The diameter of the outlet line is dimensioned such that the pressure buildup based on the high viscosity in the at least one or first mixing apparatus is minimized, but at the same time it is ensured that the outlet lines are in each case completely filled with the mixture. The mixing apparatus can be oriented as desired, such that the axis of rotation of the stirrer unit can assume any desired position from horizontal to vertical. Preferably, however, the mixing apparatus is not arranged such that the axis of symmetry of the chamber is arranged vertically and the inlet lines are attached here above the outlet lines. Very particularly preferably, the mixing apparatus is arranged such that the axis of symmetry of the chamber is arranged vertically and the inlet lines are attached here below the outlet lines. The drive motor in this connection drives the stirrer unit preferably from above, likewise a drive from below, however, is possible.

Surprisingly, it has turned out that with the geometry of the mixing apparatus, the diameter of the stirrer shaft dₛₛ relative to the internal diameter of the chamber dₖ and the ratio between the distance between inlet and outlet line and the length of the arms of the stirrer elements is decisive to ensure an optimal mixing of the supplied phases. In this connection, it has turned out that the ratio of the diameter of the stirrer shaft dₛₛ based on the internal diameter of the chamber dₖ is preferably in the range 0.25-0.75 x dₖ, particularly preferably in the range from 0.3-0.7 x dₖ, in particular in the range from 0.4-0.6 x dₖ, and the ratio between the distance between the inlet and outlet line and length of the arms of the stirrer elements is preferably in the range 3:1-50:1, particularly preferably in the range 5:1-10:1, in particular in the range 6:1-8:1.

This unusually large diameter of the stirrer shaft with respect to the chamber diameter furthermore results in the distance between stirrer shaft and chamber wall - also designated by the person skilled in the art as the "flow diameter" - always being so small that no thrombi-like flow can develop and a laminar flow is guaranteed.

It has furthermore turned out that with the geometry of the mixing apparatus, the ratio between the diameter of the chamber of the mixing apparatus and the distance which the components to be mixed must migrate through from the inlet to the outlet is important to guarantee an optimal mixing of the phases supplied. It has turned out in this connection that the ratio of diameter to the distance between inlet and outlet is preferably in the range 1:50 to 1:2, preferably from 1:30 to 1:3, in particular in the range from 1:15 to 1:5. Diameter of the chamber within the meaning of the invention is the diameter at the bottom of the chamber.

The ratio of diameter to the distance from inlet and outlet plays an important role for the control of the flow within the mixing apparatus. The success of emulsification is guaranteed only if the mixture comes into the laminar area from the initially turbulent flow which is present in the lower area of the mixing apparatus, that is in the area of component supply, via the "percolating area". An exact delimitation of the individual areas is not possible here, since the transition between the respective areas is fluid.

In an additional embodiment according to the inventive system the stirrer unit may be selected from the group consisting of full-blade-, part-blade-, full-wire-, part-wire-stirrer or a combination thereof. The mixing apparatuses used in the emulsifying device can be equipped with above mentioned stirrer units that allow a lamellar flow that guarantees droplet breakup under laminar elongation conditions at low energy uptake. The droplet breakup under laminar elongation conditions advantageously leads to an extremely small particle size distribution around a mean droplet diameter in the emulsion produced.

A full-wire stirrer is **characterized in that** it consists of at least two wires that are horseshoe-shaped or bent into the shape of a rounded rectangle, which relative to the shaft are attached opposite one another to the shaft and are connected to the shaft in the upper and lower area of the shaft. The wires here are preferably tilted and/or rotated perpendicular to the middle axis and/or are at an angle of 0° to 90°, preferably from 0° to 45°, particularly preferably from 0° to 25°, to the left or right, based on the axis of rotation. The upper and lower lengths of the wires can have identical or different lengths. As many wires as desired can be arranged on the circumference of the shaft. Further wires or any desired geometric shapes can be situated in the resulting hollow space between shaft and wire.

A wire diameter is preferred which maximally lies in the range of the shaft diameter and minimally does not fall below 0.2 mm, a wire diameter of at most 15% of the shaft diameter and minimally 0.5 mm is particularly preferred, in particular the range from 10% of the shaft diameter and minimally 1% of the shaft diameter.

A part-wire stirrer is **characterized in that** it consists of at least two U- or horseshoe-shaped bent wires, the ends of which are connected to the shaft at any desired height. The wires here are preferably perpendicular to the middle axis and/or are tilted and/or rotated at an angle of 0° to 90°, preferably from 0° to 45°, particularly preferably of 0° to 25°, to the left or right based on the axis of rotation. The upper and lower lengths of the wires extending radially from the stirrer shaft can have identical or different lengths. As many wires as desired can be arranged on the circumference of the shaft. Further wires or any desired geometric shapes can be situated in the resulting hollow space between shaft and wire.

A wire diameter is preferred that maximally is in the range of the shaft diameter and minimally does not fall below 0.2 mm, a wire diameter of maximally 15% of the shaft diameter and minimally 0.5 mm is particularly preferred, in particular the range from 10% of the shaft diameter and at least 1% of the shaft diameter.

The full-blade stirrer is **characterized in that** it consists of at least two square, rectangular, horseshoe-shaped or trapezoidal metal sheets, wherein the corners of the metal sheets are rounded off to prevent the production of turbulent flows, wherein one side is connected to the shaft, and the metal sheets reach uninterruptedly from the upper area of the shaft to the lower area of the shaft. The metal sheets in this connection are preferably perpendicular to the middle axis and/or are inclined and/or rotated at an angle of 0° to 90°, preferably from 0° to 45°, particularly preferably from 0° to 25°, to the left or right of the middle axis. The upper and lower edges of the metal sheets can have identical or different lengths. As many metal sheets as desired can be arranged on the circumference of the shaft. The individual blades can be provided with further geometric passages, such as bores or die-cuts.

The part-blade stirrer is **characterized in that** it consists of at least two square, rectangular, horseshoe-shaped or trapezoidal metal sheets, wherein one side is connected to the shaft at any desired height. The metal sheets in this connection are preferably perpendicular to the middle axis and/or are tilted and/or rotated at an angle of 0° to 90°, preferably of 0° to 45°, particularly preferably of 0° to 25°, to the left or right of the middle axis. The upper and lower edges of the metal sheets can have identical or different lengths. As many metal sheets as desired can be arranged on the circumference of the shaft. The individual metal sheets can be provided with further geometric passages.

The materials from which both the mixing apparatus itself and the above-mentioned stirrer designs, in particular the above-mentioned full-blade stirrers, part-blade stirrers, full-wire stirrers and part-wire stirrers are manufactured are suited to the chemical properties of the components to be emulsified and the resulting emulsions. Preferably, the stirrer units in the mixing apparatus according to the invention comprise steels, such as, for example, stainless steels, but also construction steels, plastics, such as, for example, PEEK, PTFE, PVC or plexiglass or compound materials or combinations of steel and plastic.

In another aspect of the invention the system may comprise an additional output line in the last mixing area, which is connectable to an input line of a previous mixing area. In certain cases it might be necessary to feed nearly pure organic oil-phase to the combustion system. This for instance when the combustion engine is started or stopped. Advantageously this is achieved by supply of the last output feed comprising a water-in-oil emulsion to previous mixing areas, where only organic oil phase is additionally supplied to the mixing chamber. Within this process it is possible to significantly reduce the water content in the water-in-oil emulsion. Therefore, nearly pure organic phase can be fed in special cases to the combustion system, when the re-feeding is enabled.

In a preferred characteristic of the inventive system at least one sensor is monitoring the water content in the mixing system. Such sensors can be helpful in order to adjust the volume feed of the organic oil phase and the water phase or the water/organic oil phases-mixtures inline. The sensor can be installed in the mixing areas or in the pipe system. As a consequence of the sensor readings the feed of single mixing areas can be tuned resulting in a constant or adaptable water to oil ratio. Possible scenarios also include an adaptable water to oil ratio as a function of the degree of capacity utilization of the combustion engine. Hence, higher or lower water content may be required in the starting, stopping process or at full capacity. Possible sensor-types are for instance sensors which are able to access the electrical properties of the mixture, for instance conductivity based sensors. In addition, also optical methods may be used, like light scattering or light absorbance measurements for the determination of the water content.

An additional inventive aspects provides a system, wherein 1-10 additional mixing areas are installed after the second mixing area each comprising at least two input lines, wherein one line feeds the output of a former mixing area and the other input line an additional organic oil phase, a mixing device and an output line. Such a mixing cascade might be helpful in order to achieve a very narrow droplet size distribution of the water in the oil phase.

Furthermore, a system is within the scope of the invention, wherein the input lines of at least one mixing area can be fed by a volume driven pump. It has been found that especially volume driven pumps deliver a constant feed rate, which is advantageously for the provision of a constant water to oil ration in the emulsion.

It is within the scope of the invention to use the system for reducing the amount of polluting contents in the exhaust gas of liquid fueled combustion engines. The system is especially suitable to reduce the amount of polluting contents in the exhaust gas of liquid fueled combustion engines due to the inventive design. The system can be realized at low costs and due to the inventive mixing setup only low mechanical energies has to be dispersed into the system in order to achieve a favorable droplet size distribution.

In addition, it is within the scope of the invention to disclose a combustion engine comprising the inventive mixing system. The mixing system can be used with all sizes of combustion systems, starting for instance with household power generators, car engines, heating systems, airplane turbines, ship's engine and large combustion engines in power plants. The system is easy to install and easily scaled up.

With respect to additional advantages and features of the previously described system it is explicitly referred to the disclosure of the inventive method and the inventive use of the system. In addition, also aspects and features of the inventive method shall be deemed applicable and disclosed to the inventive system, the inventive engine and the inventive use. Furthermore, all combinations of at least two features disclosed in the claims and/or in the description are within the scope of the invention.

### Figures:

The technical principle of the method and the system according to the invention is illustrated more closely with the aid of the following figures, wherein
Figure 1 shows the elements of the method according to the invention;
Figure 2 exhibits different possible geometries of single mixing areas and
Figure 3 displays the mixing system according to the invention in combination with a combustion engine.

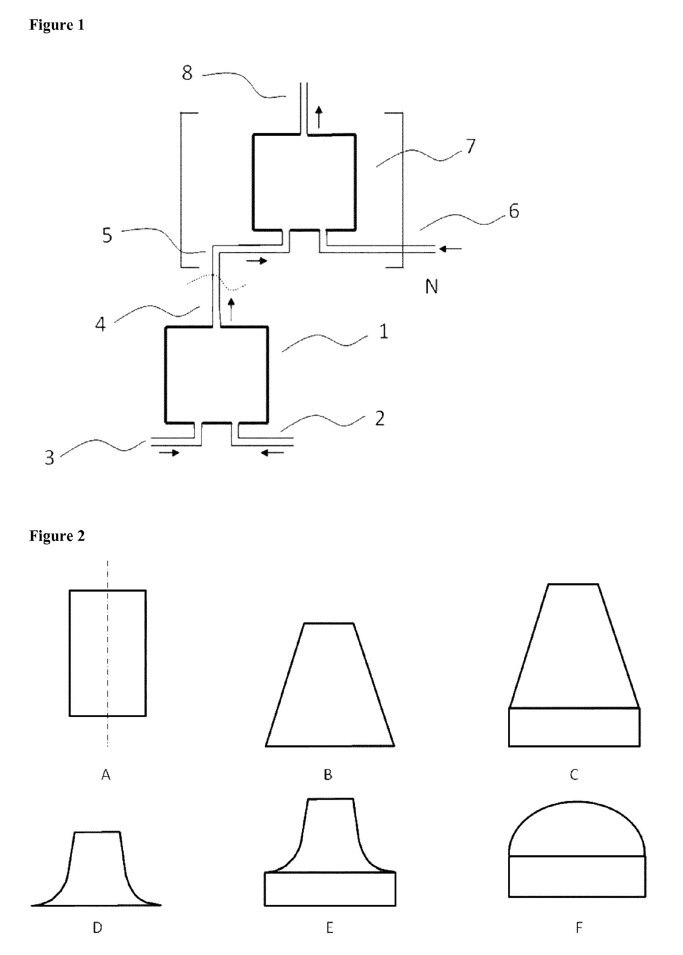

Figure 1 disclose single components of the method for the reduction of the polluting content in the exhaust gas of liquid fueled combustion engines. Into a first mixing area 1 two independent liquids are fed via the feeding lines 2 and 3. No preference is given whether the organic oil phase or the water phase are fed via the feeding lines 2 or 3. Within the mixing area 1 both liquids are mixed in order to obtain a HIPE. This mixture is fed via the output line 4 into the next mixing area 7. Into the next mixing area 7 the water/oil-mixture is fed via the feeding line 5 and an additional oil phase via the feeding line 6. The components are mixed and fed to the combustion system via the output line 8. This mixing step can be repeated N-times, wherein N = 1-10. In a preferred embodiment of the invention the feeding line 5 can have a zero length, i.e. the second or following mixing areas is/are located in the same mixing chamber as the previous ones. The location of the different mixing areas is defined by the location of the additional organic phase feeding line.

Figure 2 exhibits various possible mixing geometries of single mixing areas. For an optimal emulsifying result and for the avoidance of dead spaces, chambers that have an essentially rotationally symmetric shape are employed in the mixing apparatuses. Such essentially rotationally symmetric shapes are preferably hollow cylinders (Fig. 2 A), but also a frustocones (Fig. 2 B), funnels (Fig. 2 D), frustodomes (Fig. 2 F), or shapes composed of these (Fig. 2 C, E), in which, for example, a frustocone-like area connects to a hollow cylindrical area. The diameter of the mixing apparatus in this connection either remains constant from the inlet-side end to the outlet-side end (Fig. 2 A) or it decreases (Fig. 2 B - F). Particularly preferably, a chamber with the shape of a hollow cylinder or of a frustocone or with a combined shape of a hollow cylindrical area and a frustocone-like area is employed in the mixing apparatus according to the invention. The frustocone is advantageously distinguished in that the diameter of the inlet-side end to the diameter on the outlet-side end continually decreases, while the diameter of the hollow cylinder with respect to the axis of rotation is constant.

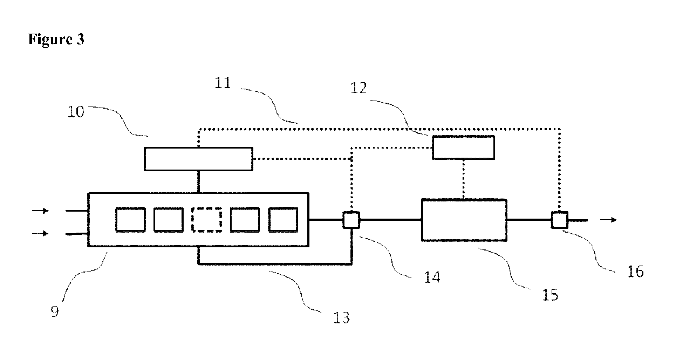

Figure 3 displays a mixing system 9 according to the invention in combination with a combustion engine 15. The mixing system 9 comprises at least two feeding lines, at least an output line, multiple mixing areas and optionally a feedback-line 13. The feedback-line 13 can for instance be activated by a valve 14. The feedback-activation can be triggered by a controlling unit 10 for example as a function of a sensor reading. The sensor might also be included in the output line of the mixing system 9. The sensor may for example analyze the composition of the output feed, e.g. by light scattering or assessment of the electrical properties. In addition, the valve activation can be triggered by a control unit 12 of the combustion engine, which is connectable to the mixing control unit and valve 14 via control lines 12. The trigger can for instance be the stop signal of the combustion engine. Due to the fact that it might be disadvantageous to keep the water-in-oil-mixture in the pipes during a stop of the combustion engine, the water to oil ratio can be modified by the feedback loop. Thus, it is possible to reduce the water content to nearly zero before the combustion engine is stopped. This might also ease the starting process of the combustion engine. Furthermore, the mixing control unit 10 might also be able to change the composition of the water-in-oil-emulsion as a function of the readings of a sensor 16 in the exhaust stream of the combustion engine, which is connected to the mixing control unit 10 via control line 11. Therefore, the composition of the output feed of the mixing system 9 can be adapted as a function of the exhaust gas composition.

## Claims

1. A method for reducing the amount of polluting contents in the exhaust gas of liquid fueled combustion engines, **characterized in that** a water-in-oil-emulsion is prepared and fed to the combustion system, comprising the steps
a) injecting an organic oil phase, an emulsifier and an aqueous phase (2,3) into a first mixing area (1);
b) mixing of the components in order to achieve a High Internal Phase Emulsion (HIPE);
c) injecting the High Internal Phase Emulsion (HIPE) of step b) and an additional organic oil phase into a second mixing area (7);
d) mixing the components in order to achieve a homogeneous water-in-oil-emulsion and
e) providing the water-in-oil-emulsion to the combustion system (8).

2. Method according to claim 1, wherein the steps c) and d) are performed in 1 - 10 separate mixing areas.

3. Method according to any of the preceding claims, wherein the water content in step b) is ≥ 0 vol.% and ≤ 95 vol.%.

4. Method according to any of the preceding claims, wherein the water content in step e) is ≥ 0,1 vol.% and ≤ 30 vol.%.

5. Method according to any of the preceding claims, wherein the emulsifier content in step b) is ≥ 2 vol.% and ≤ 5 vol.%.

6. Method according to any of the preceding claims, wherein the emulsifier content in step e) is ≥ ,05 vol.% and ≤ 1 vol.%.

7. Method according to any of the preceding claims, wherein the size of the water droplets in step e) is ≥ 100 nm and ≤ 500 nm.

8. Method according to any of the preceding claims, wherein the HLB of the emulsifier added in step a) is ≥ 1 and ≤ 9.

9. Method according to any of the preceding claims, wherein the shape factor of the emulsifier in step a) is ≥ 1/2 and ≤ 2.

10. System for the reduction of the polluting content in the exhaust gas of liquid fueled combustion engines, comprising a mixing system with at least a first (1) and a second (7) mixing area, wherein the output line of the last mixing area (8) is connectable to a combustion system and each mixing area comprises
- an essentially rotationally symmetric mixing chamber (1,7),
- at least one inlet line (2,3,5,6) for introduction of free-flowing components arranged upstream of or below the at least one outlet line,
- at least one conveying device per component or per component mixture,
- a turbulent mixing area on the inlet side, in which the components are mixed turbulently by the shear forces exerted by the stirrer units,
- a downstream percolating mixing area in which the components are mixed further and the turbulent flow decreases,
- a stirrer unit which ensures laminar flow and comprises stirrer elements secured on a stirrer shaft, the axis of rotation of which runs along the axis of symmetry of the chamber and the stirrer shaft of which is guided on at least one side,
- at least one drive for the stirrer unit,
wherein
- the ratio between the distance between inlet and outlet lines and the diameter of the chamber is ≥ 2:1,
- the ratio between the distance between inlet and outlet lines and the length of the stirrer arms of the stirrer elements is 3:1-50:1,
- the ratio of the diameter of the stirrer shaft, based on the internal diameter of the chamber, is 0.25 to 0.75 times the internal diameter of the chamber,
and wherein
the first mixing area comprises
- at least two input lines (2,3)
- a laminar mixing area on the outlet side, in which a lyotropic, liquid-crystalline phase is established in the mixture of the components, in the direction of the outlet line.

11. System according to claim 10, wherein the stirrer unit is selected from the group consisting of full-blade-, part-blade-, full-wire-, part-wire-stirrer or a combination thereof.

12. System according to claim 10 - 12, wherein an additional output line in the last mixing area is connectable to an input line of a previous mixing area.

13. System according to any of the claims 10 - 13, wherein at least one sensor is monitoring the water content in the mixing system.

14. Use of the system according to any of the claims 10-14 for reducing the amount of polluting contents in the exhaust gas of liquid fueled combustion engines.

15. Combustion engine comprising a mixing system according to any of the claims 10-14.
